# EUROPÄISCHE PATENTANMELDUNG

(11) **EP 0 977 126 A2**
(43) Veröffentlichungstag der Anmeldung: **02.02.2000**
(21) Anmeldenummer: 99109062.2
(22) Anmeldetag: 07.05.1999
(51) Int. Cl.: G06F 13/40

(54) **Schnittstelle für I2C-Bus**

(30) Priorität: 27.07.1998 DE 19833693
(71) Anmelder: Richard Wolf GmbH, 75438 Knittlingen (DE)
(72) Erfinder: Klein, Wolfgang, 76287 Rheinstetten (DE); Burger, Martin, 75038 Oberderdingen (DE); Eidner, Philipp, 75015 Bretten (DE); Rentschler, Gunther, 76703 Muenzesheim (DE)
(74) Vertreter: Vollmann, Heiko, Dipl.-Ing.

(57) **Zusammenfassung**

Die Schnittstellenschaltung dient zur Verbindung zweier Geräte (A, B) mittels eines bidirektionalen Busses, der eine Datenleitung (SDA) zur Übertragung von Daten und eine Taktleitung (SCL) zur Übertragung des Taktsignales aufweist. Die Schnittstellenschaltung besteht aus einer an jedem Gerät vorgesehenen Schaltungsanordnung, die eine Trenneinrichtung zur Auftrennung des Datensignales auf der Datenleitung (SDA) und des Taktsignals auf der Taktleitung (SCL) jeweils in einen Sende- (S) und einen Empfangszweig (E) aufweist und die darüber hinaus jeweils für die Datenleitung und die Taktleitung einen einen differentiellen Sender und Empfänger aufweisenden Bustreiber (4, 6) aufweist. Die Datensignale und Taktsignale zwischen den Geräten werden über differentielle Leitungen (SDA+, SDA-, SCL+, SCL-) übertragen.

## Beschreibung

Die Erfindung betrifft eine Schnittstellenschaltung zur Verbindung eines ersten Geräts mit wenigstens einem zweiten davon entfernten Gerät mittels eines bidirektionalen Busses, insbesondere eines I²C-Busses, der eine Datenleitung zur bidirektionalen Übertragung von Daten und eine Taktleitung zur bidirektionalen Übertragung eines Taktsignals aufweist.

Eine derartige Schnittstellenschaltung ist aus EP 0 759 593 A2 bekannt. Die bekannte Schnittstellenschaltung dient dazu, die Daten eines über einen I²C-Bus gesteuerten Geräts über eine sogenannte RS232-Schnittstelle auf einen Rechner zu übertragen und umgekehrt. Der Datentransfer wird mittels dreier Steuerleitungen abgewickelt, wobei die eine Leitung die andere Leitung in ihrem logischen Zustand "0" freigibt und in ihrem logischen Zustand "1" blockiert. Auf diese Weise lassen sich Daten bitweise vom Computer zum gesteuerten Gerät übertragen und das gesteuerte Gerät takten.

Allgemein sind beim I²C-Bus, der aus zwei Daten- und Taktsignale in beiden Richtungen übertragenden Leitungen SDA und SCL besteht, keine hardwaremäßigen Fehlererkennungsmechanismen vorhanden. Die Erkennung und ggf. Beseitigung von Übertragungsfehlern kann nur softwaremäßig realisiert werden (vgl. die Veröffentlichung "Der I²C-Bus" von Ludwig Brackmann in ELRAD 1991, Heft 5, Seite 44-47). Die genannte Veröffentlichung führt auch aus, daß der I²C-Bus zur Steuerung der Kommunikation zwischen den integrierten Schaltkreisen einer Platine oder zwischen mehreren Platinen eines Gerätes dient. Für diesen Anwendungsfall bietet der I²C-Bus Vorteile hinsichtlich der geringen auf der Platine belegten Fläche, niedrigen Gerätekosten und einer hohen Zuverlässigkeit.

Bei medizinischen Anwendungen besteht häufig Bedarf, Daten bzw. Steuerbefehle zwischen voneinander beabstandeten Geräten auszutauschen. Dies ist beispielsweise bei einem in zwei Geräte unterteilten TEM-Insuflationssystem (TEM = Transanale Endoskopische Mikrochirurgie) der Fall. Die genannten Geräte müssen beim Einsatz miteinander verbunden sein und gegenseitig Daten empfangen und senden können. Dabei ist es bei solchen medizinischen Anwendungen außerordentlich wichtig, daß alle Daten und Steuerbefehle ungestört und unverfälscht übertragen werden. Da die Geräte möglichst klein und kostengünstig realisiert werden sollen, ist somit auch kein Platz für softwaremäßige Lösungen der Erkennung oder Beseitigung von Übertragungsfehlern. Solche Übertragungsfehler können nicht nur durch Einkoppelung in die Leitungen von außen sondern auch durch Potentialunterschiede zwischen den Geräten auftreten. Eine softwaremäßig herzustellende Störsicherheit würde, wenn überhaupt erfolgreich durchführbar, einen nicht vertretbaren Aufwand bedeuten.

Vor dieser Problemstellung liegt der Erfindung die Aufgabe zugrunde, die Interaktion von durch einen I²C-Bus gesteuerten, voneinander beabstandeten Geräten so zu gestalten, daß auf physikalischem Wege Störungen des Datenaustauschs ausgeschlossen werden können.

Die Lösung dieser Aufgabe erfolgt erfindungsgemäß dadurch, daß das Datensignal SDA und das Taktsignal SCL des I²C-Busses vor dem Sender/ Empfängerbaustein zu den Übertragungsleitungen zum beabstandeten Gerät hin jeweils in einen Sendezweig und einen Empfangszweig getrennt werden und daß über einen differentiellen Sender-/Empfängerbaustein die Signale über differentielle Verbindungsleitungen zwischen den Geräten übertragen werden.

Auf den differentiellen Übertragungsleitungen liegen somit identische, jedoch in ihrer Polarität entgegengesetzte Signale vor, so daß bei der Differenzbildung eventuelle Störungen eliminiert werden. Die Sender-/Empfängerbausteine werden reflexionsfrei mit dem Wellenwiderstand der Übertragungsleitungen abgeschlossen, wodurch auch längere Verbindungsleitungen von einigen Metern bis wenigen Kilometern verwendet werden können.

Die Auftrennung in jeweils einen Sende- und Empfangszweig wird vorteilhaft durch zwei über schnelle Dioden voneinander entkoppelte Opto-Koppler durchgeführt, die zugleich auch eine galvanische Trennung der miteinander kommunizierenden Geräte erreichen.

Diese Opto-Koppler sind somit zwischen dem Gerät, dem die Schnittstelle zugeordnet ist, und dem differentiellen Bustreiber eingeschaltet. Nach den Opto-Kopplern wird das nun aufgetrennte Signal an den differentiellen Bustreiber, d.h. den Sender-/Empfängerbaustein gegeben. Der Empfänger des differentiellen Bustreibers ist so geschaltet, daß er die Signale auf dem I²C-Bus immer mithört, der Sender aber wird mittels einer Logik nur aktiviert, wenn eine "0" gesendet wird.

Selbstverständlich können, mit der erfindungsgemäßen Schnittstellenschaltung versehen, nicht nur zwei sondern auch mehr als zwei Geräte miteinander kommunizieren. Jedes Gerät muß die gleiche Schnittstelle (Schaltungsanordnung) aufweisen. Die Multimaster-Fähigkeit und die Übertragungsfrequenz des I²C-Busses bleiben erhalten.

Im folgenden wird die Erfindung anhand eines Blockschaltbildes einer bevorzugten Ausführungsform der erfindungsgemäßen Schnittstellenschaltung näher erläutert.

Die dargestellte Schnittstellenschaltung betrifft die externe Verbindung zweier Geräte A und B mittels eines I²C-Busses. Die Funktionsweise, der Aufbau und das Protokol des I²C-Busses werden als bekannt vorausgesetzt (vgl. z.B. den zuvor erwähnten Fachartikel "Der I²C-Bus" von Ludwig Brackmann).

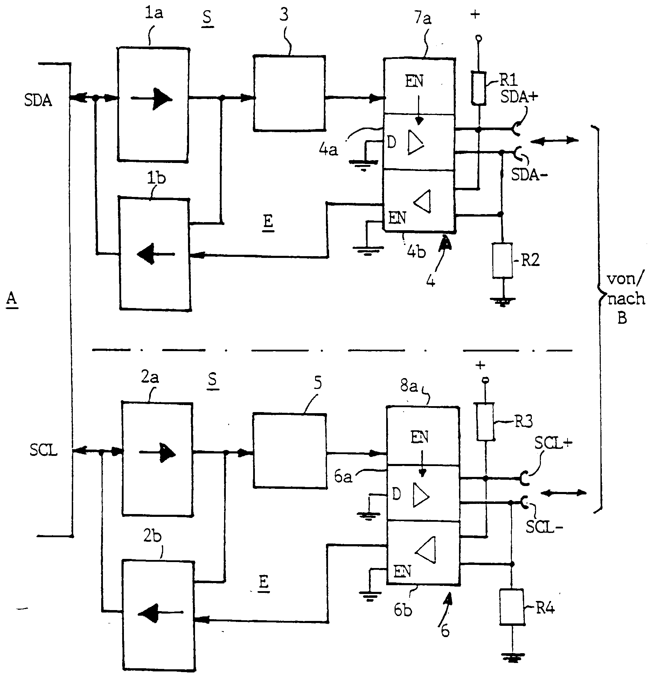

Die Schnittstellenschaltung weist eine jedem Gerät zugeordnete Schaltungsanordnung auf. Die dargestellte Schaltungsanordnung ist einem auf der linken Seite der Figur symbolisch dargestellten ersten Gerät A zugeordnet, sie empfängt über die Datenleitung SDA von dem ersten Gerät A Daten und sendet Daten an das zweite Gerät B. Gleichermaßen empfängt die Schaltungsanordnung Daten vom beabstandeten zweiten Gerät B und gibt diese Daten an das zugeordnete erste Gerät A. Die Schnittstellenschaltung empfängt/sendet auch Taktsignale vom/zum ersten Gerät A über die Taktleitung SCL.

Die dargestellte Schnittstellenschaltung ist in einem TEM-Insufflationssystem eingebaut. Das erste Gerät A ist ein Laparo-Pneu und das zweite Gerät B eine TEM-Pumpe. Bei der TEM ist es nämlich notwendig, das Rektum mit CO₂ Gas zu entfalten und bei Bedarf zu spülen. Diese TEM-Pumpe und der Laparo-Pneu müssen beim Einsatz miteinander verbunden sein und gegenseitig Daten empfangen und senden können. Bei dieser Anwendung ist es besonders wichtig, daß die zu übertragenden Daten ungestört und unverfälscht übertragen werden. Da, wie schon erwähnt, der I²C-Bus an sich keine hardwaremäßigen Fehlererkennungsmechanismen vorsieht, sieht die erfindungsgemäße Schnittstellenschaltung physikalische, d.h. Schaltungsmittel vor, die auf dem Übertragungsweg vorkommende Störungen des Datenaustausches praktisch ausschließen können.

Die Schnittstellenschaltung weist an jedem Gerät A, B identisch vorgesehene Schaltungsanordnungen auf, von denen die zu Gerät A gehörige in der Figur dargestellt ist. Für die Datenleitung SDA und die Taktleitung SCL ist eine aus Opto-Kopplern 1a, 1b, 2a, 2b bestehende Trenneinrichtung vorgesehen, die das Daten- und das Taktsignal des I²C-Bus in jeweils einen Sendezweig S und einen Empfangszweig E trennt. Die zur Trennung verwendeten Opto-Koppler 1a, 1b und 2a, 2b führen gleichzeitig eine galvanische Trennung zwischen dem ersten Gerät A und dem zweiten Gerät B durch. Durch diese Maßnahme werden mögliche, aufgrund von Ableitströmen oder durch Potentialunterschiede zwischen den Geräten A, B entstehende Störungen ausgeschlossen.

Da die Opto-Koppler 1b, 2b der Empfangszweige E nur aktiv werden dürfen, wenn eine "1" gesendet aber eine "0" empfangen wurde, und gleichzeitig verhindert werden muß, daß der jeweiligen Opto-Koppler 1b, 2b in den Empfangszweigen E eine gesendete "0" auf den Eingang SDA zum Gerät A zurückkoppelt, da sonst eine Selbsthaltung entstehen würde, sind die Opto-Koppler der Sende- und Empfangszweige 1a, 1b sowie 2a, 2b durch schnelle Dioden voneinander entkoppelt, die jedoch im Blockschaltbild der Figur nicht gesondert dargestellt sind. Die Datensignale SDA von/zu den Opto-Kopplern 1a, 1b, d.h. die nach Sende- und Empfangszweig S, E aufgetrennten Datensignale SDA sowie die Taktsignale SCL von/zu den Opto-Kopplern 2a, 2b, d.h. die nach Sende- und Empfangszweig S, E aufgetrennten Taktsignale SCL werden jeweils getrennt an zwei Sender 4a, 6a, und Empfänger 4b, 6b aufweisende differentielle Bustreiber 4, 6 angelegt.

Jeder Empfänger 4b bzw. 6b der differentiellen Bustreiber 4, 6 hört die Signale auf dem I²C-Bus immer mit. Die Sender 4a und 6a werden aber mittels einer Freigabelogik 7a bzw. 8a nur aktiv geschaltet, wenn eine "0" gesendet wird, d.h. die Sender 4a bzw. 6a werden, wenn gesendet wird, ein- bzw. ausgeschaltet. Dazu wird das Signal SDA bzw. das Taktsignal SCL im Sendezweig 5 vom Opto-Koppler über ein jeweiliges Invertierglied 3 bzw. 5 an die Freigabelogik 7a bzw. 8a des differentiellen Bustreiberbausteins 4 bzw. 6 geführt. D.h., daß das Invertierglied 3 bzw. 5 lediglich dafür sorgt, daß der Bustreiberbaustein 4 bzw. 6 gestartet bzw. gestoppt wird. Der jeweilige Dateneingang D der Sender 4a, 6a ist immer fest auf Nullpegel gehalten.

Die differentiellen Bustreiberbausteine 4, 6 setzen die I²C-Bussignale SDA bzw. SCL in physikalisch differentielle Signalpegel SDA+, SDA- bzw. SCL+ und SCL- um. Die Signalpegel SDA+, SDA- und SCL+, SCL- werden mit Widerständen R1, R2 bzw. R3, R4, deren Wert der jeweilige Wellenwiderstand ist, an den an der Schnittstelle liegenden Enden der differentiellen Busleitungen angeschlossen. Die Widerstände R1 bzw. R4 bestimmen die Pegel jeweils von SDA+, SDA- und SCL+, SCL-, während die Sender deaktiviert sind.

In den Empfängerzweigen E ist keine Invertierung nötig und auch nicht erwünscht, da ja das am Empfang ankommende Signal unverändert, d.h. nicht invertiert gelesen werden soll.

Im zweiten Gerät B befindet sich eine genau identische Schaltungsanordnung.

Die obigen Ausführungen zeigen, daß sich die erfindungsgemäße Schnittstellenschaltung für die fehlerfreie Übertragung von Daten bzw. Steuersignalen zwischen beabstandeten Geräten der Mikrochirurgie eignet. Insbesondere ist die erfindungsgemäße Schnittstellenschaltung für zwei voneinander getrennte Geräte eines TEM-Insuflationssystems geeignet, da sie die voneinander beabstandeten Geräte galvanisch trennt und die Übertragung zwischen den Geräten störsicher durch die differentiellen Bustreiberbausteine und die an ihnen anschließenden differentiellen Datensignalleitungen SDA+, SDA- bzw. Taktsignalleitungen SCL+, SCL- ablaufen kann. Die Übertragungsfrequenz sowie die bekannten Protokolle für den Datenaustausch über den I²C-Bus bleiben erhalten.

## Patentansprüche

1. Schnittstellenschaltung zur Verbindung eines ersten Geräts (A) mit wenigstens einem zweiten davon entfernten Gerät mittels eines bidirektionalen Busses, insbesondere eines I²C-Busses, der eine Datenleitung (SDA) zur bidirektionalen Übertragung von Daten und eine Taktleitung (SCL) zur bidirektionalen Übertragung eines Taktsignals aufweist, dadurch gekennzeichnet, daß die Schnittstellenschaltung aus einer an jedem Gerät vorgesehenen Schaltungsanordnung besteht, die eine Trenneinrichtung zur Auftrennung des Datensignals auf der Datenleitung (SDA) und des Taktsignals auf der Taktleitung (SCL) jeweils in einen Sende- (S) und einen Empfangszweig (E) aufweist und die jeweils für die Datenleitung (SDA) und die Taktleitung (SCL) einen differentiellen Sender und Empfänger aufweisenden Bustreiber (4, 6) aufweist, wobei Datensignale und Taktsignale zwischen den Geräten über differentielle Leitungen (SDA+, SDA-, SCL+, SCL-) übertragen werden.

2. Schnittstellenschaltung nach Anspruch 1, dadurch gekennzeichnet, daß die Trenneinrichtung für jede Leitung (SDA, SCL) und jede Richtung jeweils einen Opto-Koppler (1a, 1b, 2a, 2b) zur galvanischen Trennung des Sende- und Empfangszweiges (S, E) aufweist.

3. Schnittstellenschaltung nach Anspruch 1 oder 2, dadurch gekennzeichnet, daß jeder Bustreiber (4; 6) so geschaltet ist, daß sein Empfänger (4b, 6b) die über die differentiellen Leitungen vom entfernten Gerät ankommenden Signale immer mithört, sein Sender (4a, 6a) zum Senden der Signale jedoch mittels einer Logikschaltung (3, 5, 7a, 8a)nur aktiviert wird, wenn vom eigenen Gerät eine "0" gesendet wird.

4. Schnittstellenschaltung nach einem der vorangehenden Ansprüche, dadurch gekennzeichnet, daß die die Datensignale und Taktsignale führenden differentiellen Leitungen (SDA+, SDA-, SCL+, SCL-) an ihren Enden an der Schnittstellenschaltung jeweils durch ihre Wellenwiderstände (R1-R4) zur Erzeugung der Buspotentiale bei deaktivierten Sendern zu ihren jeweiligen Bezugspegeln hin abgeschlossen sind.

5. Schnittstellenschaltung nach einem der Ansprüche 1-4, dadurch gekennzeichnet, daß die Opto-Koppler (1a, 1b, 2a, 2b) jeweils des Sende- und Empfangszweigs (S, E) der Trenneinrichtung durch Dioden so entkoppelt sind, daß der Empfangszweig (E) nur aktiv werden kann, wenn eine "1" gesendet oder nicht gesendet, aber eine "0" empfangen wurde.

6. Verwendung der Schnittstellenschaltung nach einem der vorangehenden Ansprüche für die Übertragung von Daten bzw. Steuersignalen zwischen mehreren Geräten der Mikrochirurgie.

7. Verwendung nach Anspruch 6, dadurch gekennzeichnet, daß ein TEM-Insufflationssystem zwei jeweils mit der Schnittstellenschaltung ausgestattete, beabstandete Geräte (A, B) aufweist.

8. Verwendung nach Anspruch 6 oder 7, dadurch gekennzeichnet, daß die Geräte durch ein gemeinsames, in einem der Geräte befindliches Schaltnetzteil stromversorgt werden.
